(19) Europäisches Patentamt
European Patent Office
Office européen des brevets

(11) **EP 3 637 286 A1**

(12) **EUROPEAN PATENT APPLICATION**
published in accordance with Art. 153(4) EPC

(43) Date of publication:
**15.04.2020 Bulletin 2020/16**

(51) Int Cl.:
**G06F 17/50** (2006.01)

(21) Application number: **17912529.9**

(22) Date of filing: **09.06.2017**

(86) International application number:
**PCT/JP2017/021459**

(87) International publication number:
**WO 2018/225243 (13.12.2018 Gazette 2018/50)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Fujitsu Limited
Kawasaki-shi, Kanagawa 211-8588 (JP)**

(72) Inventors:
• **TANIGUCHI, Jun
Kawasaki-shi
Kanagawa 211-8588 (JP)**
• **SOEDA, Takeshi
Kawasaki-shi
Kanagawa 211-8588 (JP)**

(74) Representative: **Haseltine Lake Kempner LLP
Lincoln House, 5th Floor
300 High Holborn
London WC1V 7JH (GB)**

(54) **THERMAL ANALYSIS DEVICE, THERMAL ANALYSIS METHOD, AND THERMAL ANALYSIS PROGRAM**

(57) To shorten time required for thermal analysis, an estimation model generation and output unit refers to a contact determination model DB that stores a contact determination model obtained from a design asset in the past, estimates whether or not a component pair included in a target product has contact with each other, and generates an estimation model table (S20). Furthermore, a division number determination unit refers to a division method DB that stores a relationship between parameters (Sr and Tr) regarding thermal transfer of two components and the division number of a thermal network model and determines the division number of a thermal network model of the component pair included in the target product (S28). Then, a thermal network model analysis unit constructs the thermal network model of the target product by using the contact determination table that is the corrected estimation model table and the division number determined by the division number determination unit and performs thermal analysis (S30).

FIG. 10

**Description**

TECHNICAL FIELD

The present invention relates to a thermal analysis device, a thermal analysis method, and a thermal analysis program.

BACKGROUND ART

Conventionally, in thermal analysis on a printed circuit board on which a heating component is mounted, a specialist or the like has created a model and performed thermal analysis according to an analysis purpose and analysis accuracy in each case. However, to create the model, rich knowledge and the like are required, and thermal analysis cannot be quickly performed. Therefore, in recent years, a technology for automatically constructing a model has been studied (for example, refer to Patent Documents 1 to 3, and the like).

CITATION LIST

Patent Document 1: Japanese Laid-open Patent Publication No. 2004-318250
Patent Document 2: Japanese Laid-open Patent Publication No. 2007-122506
Patent Document 3: Japanese Laid-open Patent Publication No. 2012-64036

SUMMARY OF INVENTION

TECHNICAL PROBLEM

If thermal analysis can be performed in an upstream process in product design, a design guide can be easily made. To easily make the design guide, it is necessary to perform thermal analysis in a short time.
In one aspect, an object of the present invention is to provide a thermal analysis device, a thermal analysis method, and a thermal analysis program capable of shortening time required for thermal analysis.

SOLUTION TO PROBLEM

In one aspect, a thermal analysis device includes an estimation unit that refers to a first storage unit that stores information regarding whether or not two components have contact with each other obtained from design information of a product in the past and estimates whether or not a component pair included in a target product has contact with each other, a determination unit that refers to a second storage unit that stores a relationship between a parameter regarding thermal transfer of the two components and the division number of a thermal network model and determines the division number of the thermal network model of the component pair included in the target product, and a thermal analysis unit that constructs the thermal network model of the target product by using an estimation result of the estimation unit and a determination result of the determination unit and performs thermal analysis.

ADVANTAGEOUS EFFECTS OF INVENTION

Time required for thermal analysis can be shortened.

BRIEF DESCRIPTION OF DRAWINGS

FIG. 1 is a schematic diagram of a hardware configuration of a thermal analysis device according to one embodiment.
FIG. 2 is a functional block diagram of the thermal analysis device.
FIG. 3 is a diagram of data of each component pair.
FIGs. 4A to 4C are diagrams for explaining a division method.
FIG. 5 is a diagram of an exemplary data structure of a division method DB.
FIG. 6 is a diagram of exemplary component data.
FIG. 7A is a diagram of an estimation model table, and FIG. 7B is a diagram of a contact determination table.

FIG. 8 is a table indicating a network analysis result, an actual measurement value, and an error regarding a rising temperature of a display.

FIG. 9A is a diagram of exemplary data of a division method that is added to the division method DB by a learning unit, and FIG. 9B is a diagram of exemplary model data that is added to a design asset DB by the learning unit.

FIG. 10 is a flowchart of processing of the thermal analysis device.

FIG. 11 is a diagram for explaining a method for utilizing thermal analysis.

FIG. 12 is a diagram for explaining a modification.

FIG. 13 is a diagram of an example in which a cloud server has a function of the thermal analysis device.

DESCRIPTION OF EMBODIMENTS

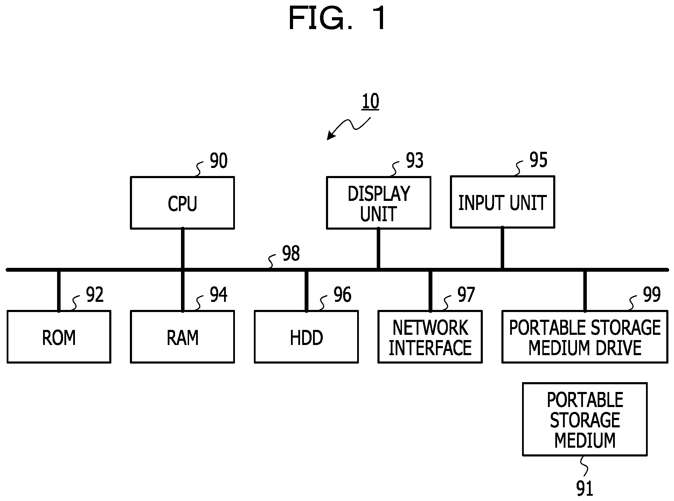

Hereinafter, one embodiment of a thermal analysis device will be described in detail with reference to FIGs. 1 to 11.

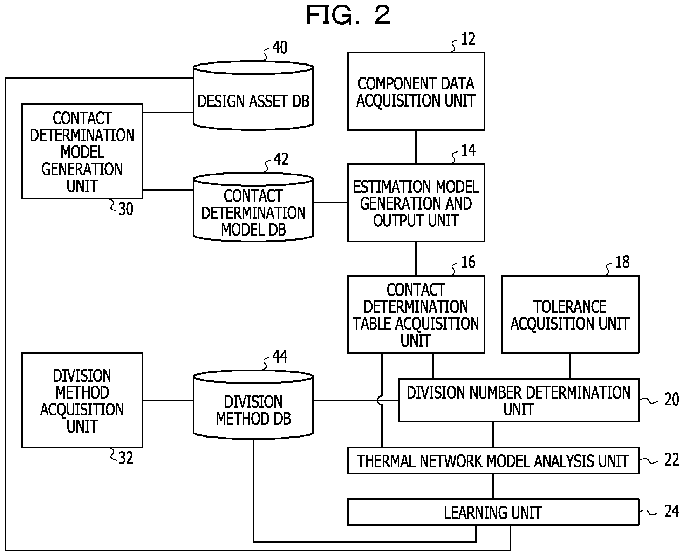

In FIG. 1, a hardware configuration of a thermal analysis device 10 is illustrated. The thermal analysis device 10 is a Personal Computer (PC) and the like, and as illustrated in FIG. 1, the thermal analysis device 10 includes a Central Processing Unit (CPU) 90, a Read Only Memory (ROM) 92, a Random Access Memory (RAM) 94, a storage unit (here, Hard Disk Drive (HDD)) 96, a network interface 97, a display unit 93, an input unit 95, a portable storage medium drive 99, and the like. Each component of the thermal analysis device 10 is connected to a bus 98. The display unit 93 includes a liquid crystal display and the like, and the input unit 95 includes a keyboard, a mouse, a touch panel, and the like. In the thermal analysis device 10, the CPU 90 executes a program (including thermal analysis program) stored in the ROM 92 or the HDD 96 or a program (including thermal analysis program) read from a portable storage medium 91 by the portable storage medium drive 99 so as to implement the function of each unit illustrated in FIG. 2. Note that in FIG. 2, databases (DB) stored in the HDD 96 of the thermal analysis device 10 and the like are illustrated.

In the thermal analysis device 10, the CPU 90 executes the program so as to implement functions of a contact determination model generation unit 30, a division method acquisition unit 32, a component data acquisition unit 12, an estimation model generation and output unit 14 as an estimation unit, a contact determination table acquisition unit 16, a tolerance acquisition unit 18 as a reception unit, a division number determination unit 20 as a determination unit, a thermal network model analysis unit 22 as a thermal analysis unit, and a learning unit 24 as an update unit illustrated in FIG. 2.

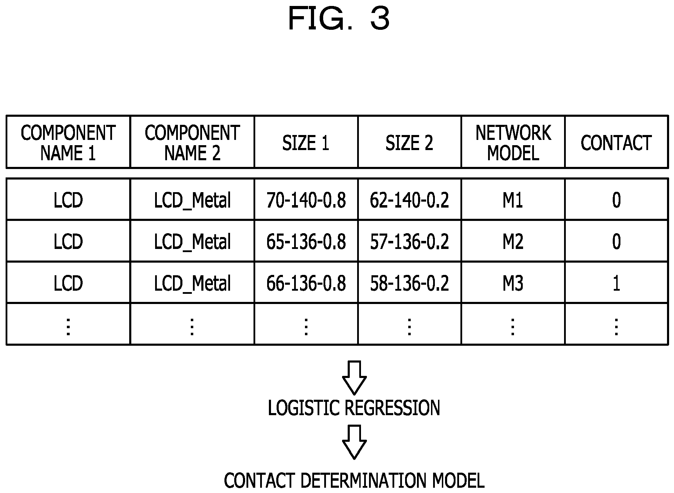

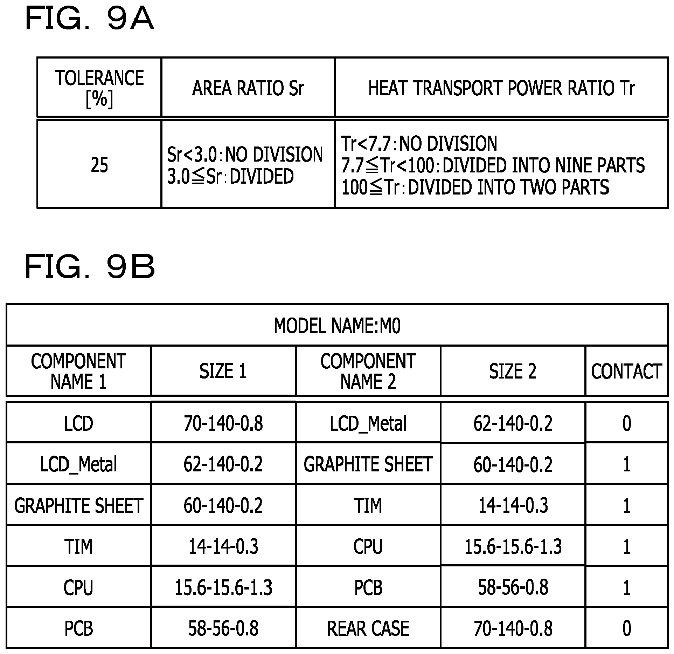

The contact determination model generation unit 30 acquires information regarding a past product stored in a design asset DB 40 and generates data of each component pair (FIG. 3) based on the acquired information. Here, the design asset DB 40 is a database that stores data similar to model data to be described later (refer to FIG. 9B). Furthermore, the data of each component pair includes data of two components having contact with each other or facing each other in a product. Specifically, the data of each component pair includes data of "component name 1" and "component name 2" that are names of the two components included in the component pair, data of "size 1" and "size 2" that are sizes of the respective components, data of "network model" that is a name of a network model used for thermal analysis, and data of "contact" indicating whether or not the component pair has contact with each other. In the data of "contact", a value in a case where the component pair has contact with each other is "1", and a value in a case where the component pair does not have contact with each other is "0".

Furthermore, as illustrated in FIG. 3, the contact determination model generation unit 30 performs logistic regression on the data of each component pair and generates a contact determination model. The contact determination model is a model used to determine whether or not the two components (component pair) included in the product have contact with each other (for example, model used to calculate probability of contact). The contact determination model generation unit 30 stores the generated contact determination model in a contact determination model DB 42 as a first storage unit. Note that it can be said that the contact determination model is information regarding whether or not the two components have contact with each other obtained from product design information in the past.

The division method acquisition unit 32 acquires information regarding a division method based on a thermal network model which has been used in thermal analysis in the past, created by a user.

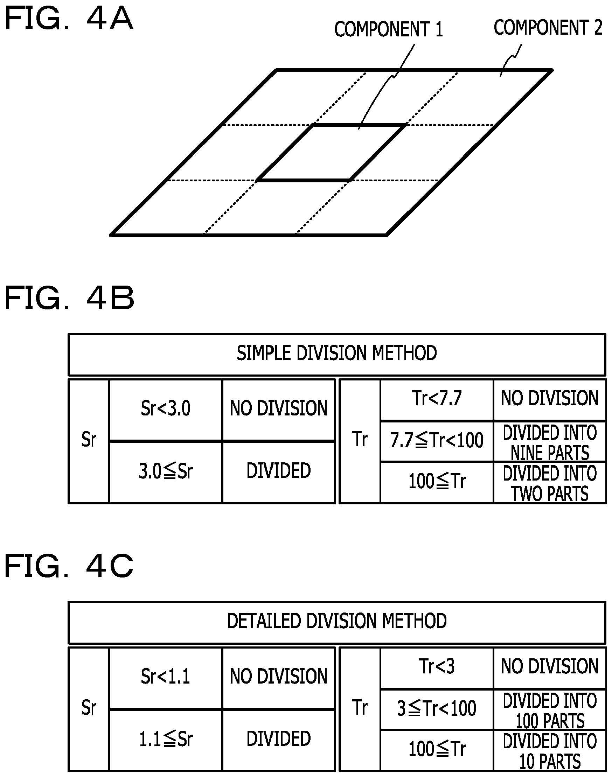

As an example, it is assumed that the division method according to the present embodiment be a method for determining the number of divisions by using an area ratio of the two components and a heat transport power ratio of the two components as parameters. FIGs. 4A to 4C are diagrams for explaining the division method. As illustrated in FIG. 4A, in a case where the component pair includes a component 1 and a component 2, an area ratio $Sr$ and a heat transport power ratio $Tr$ are respectively expressed as the following formulas (1) and (2).

$$Sr = \text{area of component 2/area of component 1} \ldots (1)$$

$$Tr = \text{heat transport power of component 2/heat transport power of}$$

$$\text{component 1...(2)}$$

Note that the heat transport power [W/K] is expressed as the following formula (3).

$$\text{Heat transport power} = \text{heat conductivity} \times \text{height of component}$$

$$\text{(thickness)...(3)}$$

Then, the user divides the division methods into a simple division method (division method with large tolerance) and a detailed division method (division method with small tolerance) and determines a division method based on the thermal network model that has been used in the thermal analysis in the past.

For example, in the example in FIG. 4B, when a simple division method is used, in a case of Sr < 3.0, no division is made, and in a case of 3.0 ≤ Sr, division is made. Furthermore, if Tr < 7.7, no division is made, in a case of 7.7 ≤ Tr < 100, division into nine parts is made, and in a case of 100 ≤ Tr, division into two parts is made. On the other hand, when a detailed division method is used, as illustrated in FIG. 4C, in a case of Sr < 1.1, no division is made, and in a case of 1.1 ≤ Sr, division is made. Furthermore, if Tr < 3, no division is made, in a case of 3 ≤ Tr < 100, division into 100 parts is made, and in a case of 100 ≤ Tr, division into 10 parts is made.

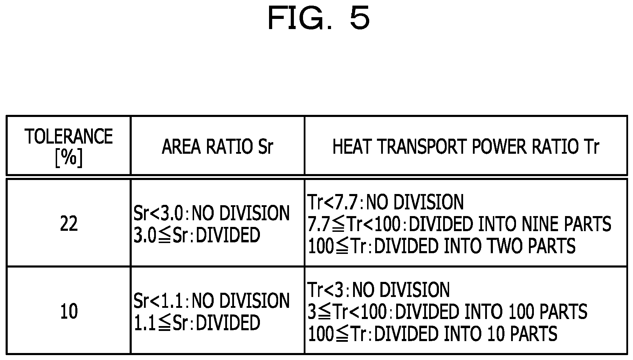

Then, the division method acquisition unit 32 performs thermal analysis on sample data (component data of sample product) by using the simple division method and the detailed division method and obtains an error between the analysis result and the actual measurement value. Then, the obtained error is associated with the division method, and a division method DB 44 as a second storage unit as illustrated in FIG. 5 is generated. Note that the division method DB 44 includes a plurality of records (rows), and it is assumed that a division method associated with an error closest to a tolerance input by the user be used by the division number determination unit 20 described later. Note that the user may determine how to use each division method in advance, for example, in a case where a tolerance is equal to or more than a predetermined value, the simple division method is used, and in a case where the tolerance is less than the predetermined value, the detailed division method is used.

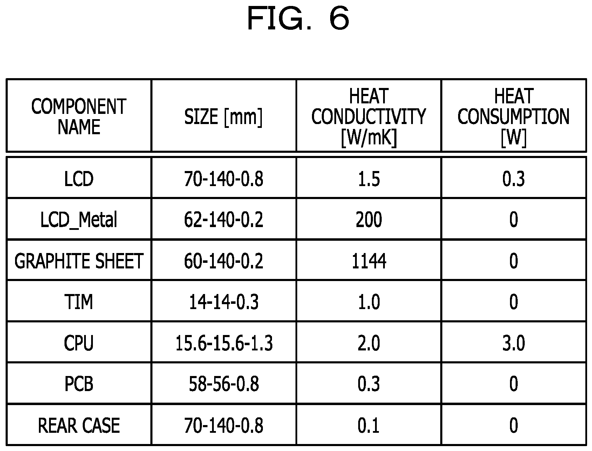

Returning to FIG. 2, the component data acquisition unit 12 acquires component data of a target product of the thermal analysis input by the user of the thermal analysis device 10. Here, as an example, it is assumed that the component data be data as illustrated in FIG. 6. Specifically, the component data is information regarding components included in the target product and includes each field of "component name", "size", "heat conductivity", and "heat consumption". In the field of "component name", the name of the component is stored, and in the field of "size", dimensions of the depth (D), the width (W), and the height (H) (unit [mm]) are stored. Furthermore, in the field of "heat conductivity", a value of the heat conductivity (unit [W/mK]) is stored, and in the field of "heat consumption", a value of the heat consumption (unit [W]) is stored.

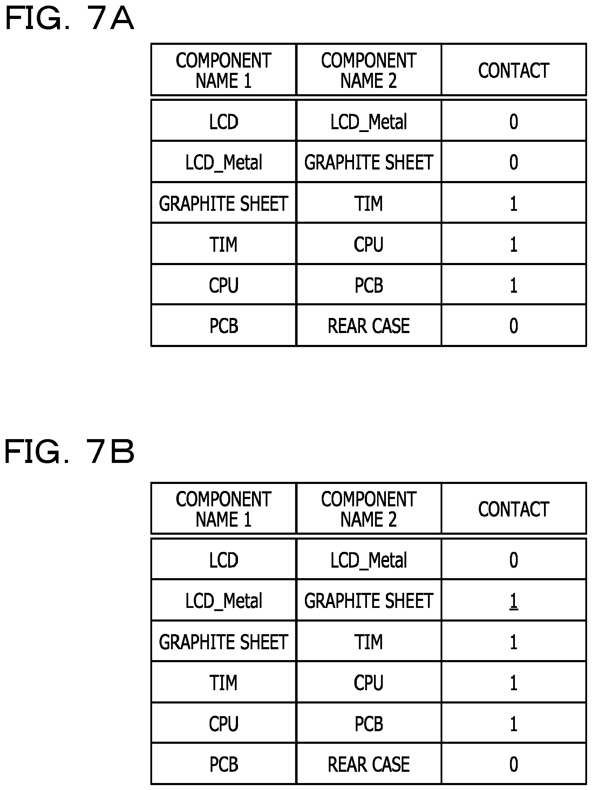

The estimation model generation and output unit 14 refers to the contact determination model DB 42 and estimates whether or not the components included in the component data acquired by the component data acquisition unit 12 have contact with each other. Furthermore, the estimation model generation and output unit 14 generates an estimation model table as illustrated in FIG. 7A as an estimation result and displays the generated table on the display unit 93. Here, the estimation model table includes fields of "component name 1" and "component name 2" that are names of the respective components included in the component pair and a field of "contact" indicating whether or not the component pair has contact with each other. Note that the user refers to the estimation model table, and if there was information to be corrected, the user corrects the information. Then, when the correction is completed, the user performs a confirmation operation (for example, to push confirmation button, and the like). In a case where the user performs the confirmation operation, the estimation model table becomes a contact determination table as illustrated in FIG. 7B. Note that as understood from the comparison with FIG. 7A, a contact state between a component name 1 "LCD_Metal" and a component name 2 "graphite sheet" in the contact determination table in FIG. 7B is corrected by the user.

Returning to FIG. 2, the contact determination table acquisition unit 16 acquires the estimation model table confirmed by the user (that is, contact determination table in FIG. 7B) and transmits the acquired contact determination table to the division number determination unit 20 and the thermal network model analysis unit 22.

The tolerance acquisition unit 18 prompts the user to input a tolerance (that is, required accuracy), acquires a value of the input tolerance, and transmits the value to the division number determination unit 20.

The division number determination unit 20 determines the division number of the thermal network model based on the division method DB 44 (FIG. 5) by using the tolerance acquired by the tolerance acquisition unit 18 and the data of the contact determination table acquired by the contact determination table acquisition unit 16. The division number determination unit 20 transmits information regarding the determined division number to the thermal network model analysis unit 22.

The thermal network model analysis unit 22 constructs a thermal network model by using the division number determined by the division number determination unit 20 and the information regarding the contact determination table and performs thermal analysis. Note that at the time of thermal analysis, the component data acquired by the component data acquisition unit 12 and the like are also used.

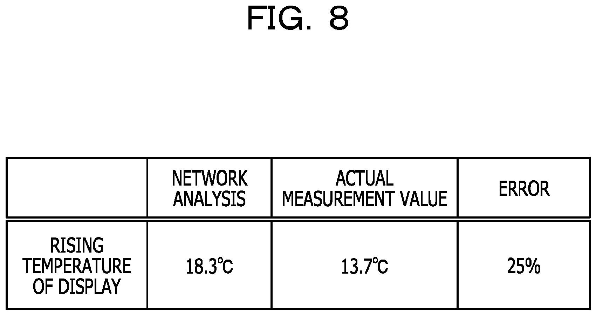

When acquiring an analysis result by the thermal network model analysis unit 22 and acquiring the actual measurement value and a simulation result (hereinafter, simply referred to as "actual measurement value"), the learning unit 24 calculates an error between the analysis result and the actual measurement value. In FIG. 8, a network analysis result, an actual measurement value, and an error regarding a rising temperature of a display are illustrated as an example. When it is assumed that the network analysis result of the rising temperature be $\Delta T1$ and the actual measurement value of the rising temperature be $\Delta T2$, an error P can be calculated by the following formula (4).

$$P(\%) = (|\Delta T1 - \Delta T2|/\Delta T1) \times 100...(4)$$

Then, the learning unit 24 updates the division method DB 44 by using the calculated error and the division method and adds the information regarding the contact determination table used for the thermal analysis to the design asset DB 40. For example, the learning unit 24 adds the data in FIG. 9A to the division method DB 44 and adds the model data illustrated in FIG. 9B to the design asset DB 40. Note that the model data in FIG. 9B is a collection of component names and sizes of the component pairs included in the product on which the thermal analysis has been performed, and whether the component pair has contact with each other. Note that the contact determination model generation unit 30 may newly generate a contact determination model each time when new data is added to the design asset DB 40 and may generate only a contact determination model designated by the user. Note that in a case where the calculated error deviates from the tolerance input by the user, the learning unit 24 may appropriately correct the contact determination model DB 42 and the division method DB 44.

(Regarding Processing by Thermal Analysis Device 10)

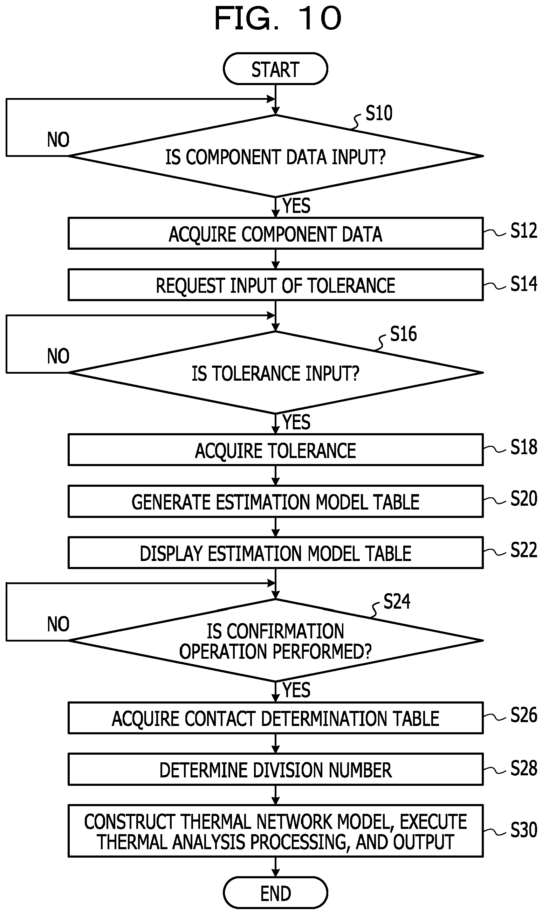

Next, processing by the thermal analysis device 10 will be described with reference to the flowchart in FIG. 10. Note that at the time when the processing in FIG. 10 is executed, the contact determination model DB 42 stores the contact determination model generated by the contact determination model generation unit 30, and the data in FIG. 5 is generated by the division method acquisition unit 32 and stored in the division method DB 44.

When the processing in FIG. 10 is started, the component data acquisition unit 12 waits for an input of the component data in step S10. When the component data is input, the component data acquisition unit 12 proceeds the procedure to step S12 and acquires the input component data (FIG. 6).

Next, in step S14, the tolerance acquisition unit 18 requests the user to input the tolerance via the display unit 93. Specifically, the tolerance acquisition unit 18 prompts the user to input the tolerance, for example, by displaying a tolerance input screen on the display unit 93.

Next, in step S16, the tolerance acquisition unit 18 waits for an input of the tolerance. When the user inputs the tolerance via the input unit 95, the tolerance acquisition unit 18 proceeds the procedure to step S18 and acquires the input tolerance.

Next, in step S20, the estimation model generation and output unit 14 generates the estimation model table (FIG. 7A) from the component data with reference to the contact determination model DB 42. Next, in step S22, the estimation model generation and output unit 14 displays the estimation model table generated in step S20 on the display unit 93.

Next, in step S24, the contact determination table acquisition unit 16 waits for the confirmation operation by the user. When the user performs the confirmation operation, the contact determination table acquisition unit 16 proceeds the procedure to step S26 and acquires the estimation model table that has been changed and confirmed (that is, contact determination table).

Next, in step S28, the division number determination unit 20 determines the division number for each component pair based on the tolerance with reference to the division method DB 44.

Next, in step S30, the thermal network model analysis unit 22 constructs the thermal network model based on the division number determined in step S28, the contact determination table, the component data, and the like, executes thermal analysis processing, and outputs a thermal analysis result (display on display unit 93).

As described above, at the time when the processing to step S30 is completed, all the processing in FIG. 10 is terminated. In the present embodiment, by executing the processing in FIG. 10, even if the user is not a trained expert, the thermal analysis can be performed in a short time. Note that it is assumed that the learning unit 24 appropriately execute the processing described above at a timing when the actual measurement value and the simulation result are acquired.

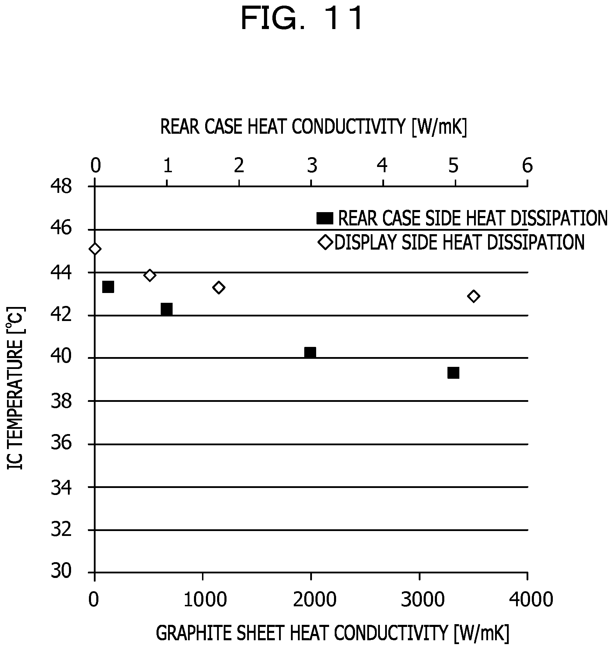

Here, for example, it is assumed to perform thermal analysis on a temperature of an Integrated Circuit (IC) in a case where a heat conductivity of a graphite sheet provided on a display side of the IC and a heat conductivity of a rear case are changed at the time of design of a mobile terminal. The thermal analysis result in this case is illustrated in FIG. 11. In the present embodiment, by executing the processing along the flowchart in FIG. 10 at the time of thermal analysis, the result as illustrated in FIG. 11 can be obtained in a short time. From this result, it is found that an effect in IC temperature reduction is more enhanced by increasing the heat conductivity of the rear case than by increasing the heat conductivity of the graphite sheet. Therefore, a designer can design based on this result. Note that a workload to obtain the result in FIG. 11 can be reduced to about 1/3 than a case where a heat dissipation path to be reflected in thermal design is found as referring to Computer Aided Design (CAD) data to construct a model or a person sets the number of nodes per component as referring to experimental data and design asset (comparative example).

As described above in detail, according to the present embodiment, the estimation model generation and output unit 14 refers to the contact determination model DB 42 that stores the contact determination model obtained from the design asset in the past, estimates whether or not the component pair included in the target product has contact with each other, and generates the estimation model table (S20). Furthermore, the division number determination unit 20 refers to the division method DB 44 that stores a relationship between the parameters (Sr and Tr) regarding the thermal transfer of the two components and the division number of the thermal network model and determines the division number of the thermal network model of the component pair included in the target product (S28). Then, the thermal network model analysis unit 22 constructs the thermal network model of the target product by using the contact determination table obtained by correcting the estimation model table and the division number determined by the division number determination unit 20 and performs thermal analysis (S30). With this operation, in the present embodiment, even if the user is not a skilled designer and the like, the contact determination table can be easily created, and the division number can be automatically determined. Therefore, the construction of the thermal network model and the thermal analysis can be performed in a short time. Accordingly, since a large number of product configurations can be examined in an upstream process in the product design, the design can be easily made. Furthermore, even when thermal analysis is performed on a system in which components and sizes are mixed, the thermal analysis can be efficiently performed by using the contact determination model.

Furthermore, in the present embodiment, the thermal network model is constructed by using the table (contact determination table) confirmed after the estimation model table generated by the estimation model generation and output unit 14 is output and confirmed and corrected by the user. With this operation, it is possible to perform thermal analysis after reflecting a design guide of the user.

Furthermore, in the present embodiment, the tolerance acquisition unit 18 receives the input of the tolerance in the thermal analysis and determines the division number by the division method corresponding to the tolerance. Therefore, the appropriate division number can be determined with accuracy required by the user.

Furthermore, in the present embodiment, the design asset DB 40 and the division method DB 44 are updated (learned) based on the thermal analysis result. Therefore, determination accuracy regarding whether or not the components have contact with each other and determination accuracy of the division number can be increased.

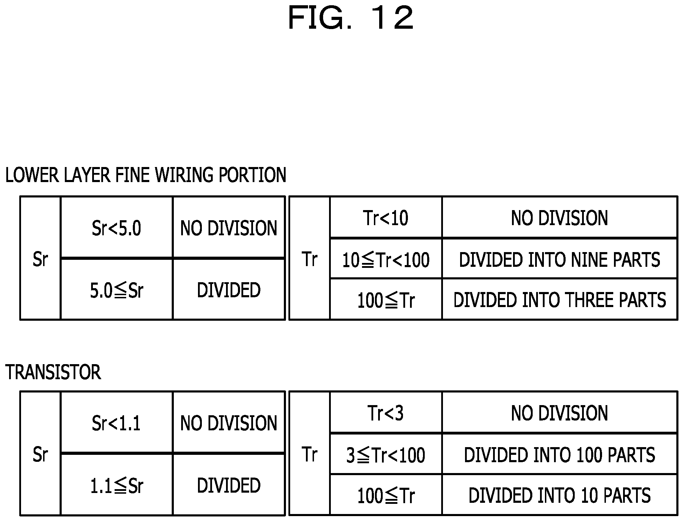

Note that in the embodiment, the thermal analysis processing of the product such as the mobile terminal has been described. However, the present invention is not limited to this. For example, when a model used to estimate a temperature of a part that is difficult to predict from an analysis result of a broken LSI is constructed, the method similar to that in the embodiment can be adopted. In this case, for example, as in a case of multilayer, in a case where a size and a material of an analysis target largely differ according to a layer, as illustrated in FIG. 12, the division number of a certain layer (for example, lower layer fine wiring portion) and the division number of another layer (for example, transistor) may be determined by different division methods.

Note that in the embodiment, as the parameters regarding the thermal transfer of the two components that are used when the division number is determined, the area ratio and the heat transport power ratio are used. However, the present invention is not limited to this, and only one of the area ratio and the heat transport power ratio may be used. Furthermore, as the parameters regarding the thermal transfer of the two components, a parameter other than the area ratio and the heat transport power ratio may be adopted.

Note that in the embodiment, a case has been described in which the user is made to input the tolerance and the division number determination unit 20 determines the division number based on the tolerance. However, the present invention is not limited to this. For example, the division number determination unit 20 may determine the division number without using the tolerance. In this case, it is sufficient that only one type of division method be prepared.

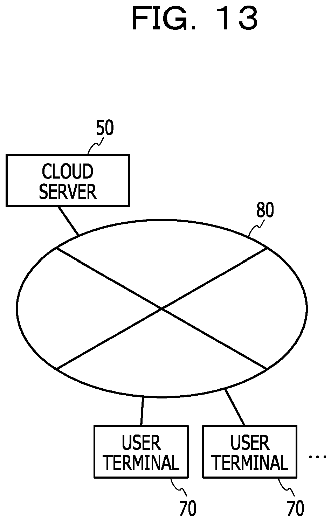

Note that in the embodiment, a case has been described in which the thermal analysis device 10 has each function in FIG. 2. However, the present invention is not limited to this. For example, a cloud server 50 connected to a network 80 such as the Internet as illustrated in FIG. 13 may has each function in FIG. 2. In this case, the cloud server 50 receives component data, a tolerance, and the like input from a user terminal 70 and executes the processing in FIG. 10. Note that the cloud server 50 may be provided anywhere in Japan and overseas.

Note that the processing functions described above can be implemented by a computer. In that case, a program is provided in which processing content of a function to be included in a processing apparatus is written. The above processing functions are implemented on the computer by executing the program by the computer. The program in which the processing content is written can be recorded in a computer-readable reading medium (except for a carrier wave).

In a case of distributing the program, for example, the program is sold in the form of a portable reading medium such as a digital versatile disc (DVD) or a compact disc read only memory (CD-ROM) in which the program is recorded. Alternatively, it is possible to store the program in a storage device of a server computer and transfer the program from the server computer to another computer via a network.

The computer which executes the program stores, for example, the program recorded in the portable reading medium or the program transferred from the server computer in a storage device of the computer. Then, the computer reads the program from the storage device of the computer and executes processing according to the program. Note that the computer can directly read the program from the portable reading medium and execute processing according to the program. Furthermore, the computer also can sequentially execute processing according to the received program each time when the program is transferred from the server computer.

The embodiment described above is a preferred example of carrying out the present invention. However, the present invention is not limited to this, and a variety of modifications can be made without departing from the scope of the present invention.

REFERENCE SIGNS LIST

10: Thermal analysis device
14: Estimation model generation and output unit (estimation unit)
18: Tolerance acquisition unit (reception unit)
20: Division number determination unit (determination unit)
22: Thermal network model analysis unit (thermal analysis unit)
24: Learning unit (update unit)
42: Contact determination model DB (first storage unit)
44: Division method DB (second storage unit)

**Claims**

1.  A thermal analysis device comprising:

    an estimation unit configured to refer to a first storage unit that stores information regarding whether or not two components have contact with each other obtained from design information of a product in the past and estimate whether or not a component pair included in a target product has contact with each other;
    a determination unit configured to refer to a second storage unit that stores a relationship between a parameter regarding thermal transfer of the two components and the division number of a thermal network model and determine the division number of the thermal network model of the component pair included in the target product; and
    a thermal analysis unit configured to construct the thermal network model of the target product by using an estimation result of the estimation unit and a determination result of the determination unit and perform thermal analysis.

2.  The thermal analysis device according to claim 1, wherein
    the thermal analysis unit receives an input of a correction request of the estimation result of the estimation unit and constructs the thermal network model of the target product by using the estimation result reflecting the correction request.

3.  The thermal analysis device according to claim 1 or 2, further comprising:

    a reception unit configured to receive an input of required accuracy for the thermal analysis, wherein

the second storage unit stores the relationship between the parameter regarding the thermal transfer of the two components and the division number of the thermal network model in association with different required accuracy, and

the determination unit determines the division number of the thermal network model of the component pair included in the target product by using the relationship between the parameter and the division number associated with the required accuracy received by the reception unit.

4. The thermal analysis device according to any one of claims 1 to 3, wherein
the parameter regarding the thermal transfer includes an area ratio of the two components.

5. The thermal analysis device according to any one of claims 1 to 4, wherein
the parameter regarding the thermal transfer includes a ratio of ease of thermal transfer in the two components.

6. The thermal analysis device according to any one of claims 1 to 5, further comprising:
an update unit configured to update the first storage unit by using the estimation result of the estimation unit and update the second storage unit by using the determination result of the determination unit based on a thermal analysis result of the thermal analysis unit.

7. A thermal analysis method for causing a computer to execute processing for:

referring to a first storage unit that stores information regarding whether or not two components have contact with each other obtained from design information of a product in the past and estimating whether or not a component pair included in a target product has contact with each other;
referring to a second storage unit that stores a relationship between a parameter regarding thermal transfer of the two components and the division number of a thermal network model and determining the division number of the thermal network model of the component pair included in the target product; and
constructing the thermal network model of the target product by using an estimation result of the estimating processing and a determination result of the determining processing and performing thermal analysis.

8. The thermal analysis method according to claim 7, wherein
in the processing for performing thermal analysis, an input of a correction request regarding the estimation result of the estimating processing is received, and the thermal network model of the target product is constructed by using the estimation result reflecting the correction request.

9. The thermal analysis method according to claim 7 or 8, causing the computer to further execute processing for:

receiving an input of required accuracy for the thermal analysis, wherein
the second storage unit stores the relationship between the parameter regarding the thermal transfer of the two components and the division number of the thermal network model in association with different required accuracy, and
in the determining processing, the division number of the thermal network model of the component pair included in the target product is determined by using the relationship between the parameter and the division number associated with the required accuracy received in the receiving processing.

10. The thermal analysis method according to any one of claims 7 to 9, wherein
the parameter regarding the thermal transfer includes an area ratio of the two components.

11. The thermal analysis method according to any one of claims 7 to 10, wherein
the parameter regarding the thermal transfer includes a ratio of ease of thermal transfer in the two components.

12. The thermal analysis method according to any one of claims 7 to 11, wherein
the computer further executes processing for updating the first storage unit by using an estimation result of the estimating processing and updating the second storage unit by using a determination result of the determining processing based on a thermal analysis result of the processing for performing the thermal analysis.

13. A thermal analysis program for causing a computer to execute processing for:

referring to a first storage unit that stores information regarding whether or not two components have contact with each other obtained from design information of a product in the past and estimating whether or not a component pair included in a target product has contact with each other;

referring to a second storage unit that stores a relationship between a parameter regarding thermal transfer of the two components and the division number of a thermal network model and determining the division number of the thermal network model of the component pair included in the target product; and

constructing the thermal network model of the target product by using an estimation result of the estimating processing and a determination result of the determining processing and performing thermal analysis.

# FIG. 1

10

# FIG. 2

DESIGN ASSET DB — 40

COMPONENT DATA ACQUISITION UNIT — 12

CONTACT DETERMINATION MODEL GENERATION UNIT — 30

CONTACT DETERMINATION MODEL DB — 42

ESTIMATION MODEL GENERATION AND OUTPUT UNIT — 14

CONTACT DETERMINATION TABLE ACQUISITION UNIT — 16

TOLERANCE ACQUISITION UNIT — 18

DIVISION METHOD ACQUISITION UNIT — 32

DIVISION METHOD DB — 44

DIVISION NUMBER DETERMINATION UNIT — 20

THERMAL NETWORK MODEL ANALYSIS UNIT — 22

LEARNING UNIT — 24

# FIG. 3

| COMPONENT NAME 1 | COMPONENT NAME 2 | SIZE 1 | SIZE 2 | NETWORK MODEL | CONTACT |
|---|---|---|---|---|---|
| LCD | LCD_Metal | 70-140-0.8 | 62-140-0.2 | M1 | 0 |
| LCD | LCD_Metal | 65-136-0.8 | 57-136-0.2 | M2 | 0 |
| LCD | LCD_Metal | 66-136-0.8 | 58-136-0.2 | M3 | 1 |
| ⋮ | ⋮ | ⋮ | ⋮ | ⋮ | ⋮ |

⬇

LOGISTIC REGRESSION

⬇

CONTACT DETERMINATION MODEL

## FIG. 4A

COMPONENT 1   COMPONENT 2

## FIG. 4B

| SIMPLE DIVISION METHOD | | | | | |
|---|---|---|---|---|---|
| Sr | Sr<3.0 | NO DIVISION | Tr | Tr<7.7 | NO DIVISION |
| | 3.0≦Sr | DIVIDED | | 7.7≦Tr<100 | DIVIDED INTO NINE PARTS |
| | | | | 100≦Tr | DIVIDED INTO TWO PARTS |

## FIG. 4C

| DETAILED DIVISION METHOD | | | | | |
|---|---|---|---|---|---|
| Sr | Sr<1.1 | NO DIVISION | Tr | Tr<3 | NO DIVISION |
| | 1.1≦Sr | DIVIDED | | 3≦Tr<100 | DIVIDED INTO 100 PARTS |
| | | | | 100≦Tr | DIVIDED INTO 10 PARTS |

# FIG. 5

| TOLERANCE [%] | AREA RATIO Sr | HEAT TRANSPORT POWER RATIO Tr |
|---|---|---|
| 22 | Sr<3.0:NO DIVISION<br>3.0≦Sr:DIVIDED | Tr<7.7:NO DIVISION<br>7.7≦Tr<100:DIVIDED INTO NINE PARTS<br>100≦Tr:DIVIDED INTO TWO PARTS |
| 10 | Sr<1.1:NO DIVISION<br>1.1≦Sr:DIVIDED | Tr<3:NO DIVISION<br>3≦Tr<100:DIVIDED INTO 100 PARTS<br>100≦Tr:DIVIDED INTO 10 PARTS |

# FIG. 6

| COMPONENT NAME | SIZE [mm] | HEAT CONDUCTIVITY [W/mK] | HEAT CONSUMPTION [W] |
|---|---|---|---|
| LCD | 70-140-0.8 | 1.5 | 0.3 |
| LCD_Metal | 62-140-0.2 | 200 | 0 |
| GRAPHITE SHEET | 60-140-0.2 | 1144 | 0 |
| TIM | 14-14-0.3 | 1.0 | 0 |
| CPU | 15.6-15.6-1.3 | 2.0 | 3.0 |
| PCB | 58-56-0.8 | 0.3 | 0 |
| REAR CASE | 70-140-0.8 | 0.1 | 0 |

# FIG. 7A

| COMPONENT NAME 1 | COMPONENT NAME 2 | CONTACT |
|---|---|---|
| LCD | LCD_Metal | 0 |
| LCD_Metal | GRAPHITE SHEET | 0 |
| GRAPHITE SHEET | TIM | 1 |
| TIM | CPU | 1 |
| CPU | PCB | 1 |
| PCB | REAR CASE | 0 |

# FIG. 7B

| COMPONENT NAME 1 | COMPONENT NAME 2 | CONTACT |
|---|---|---|
| LCD | LCD_Metal | 0 |
| LCD_Metal | GRAPHITE SHEET | 1 |
| GRAPHITE SHEET | TIM | 1 |
| TIM | CPU | 1 |
| CPU | PCB | 1 |
| PCB | REAR CASE | 0 |

# FIG. 8

|  | NETWORK ANALYSIS | ACTUAL MEASUREMENT VALUE | ERROR |
|---|---|---|---|
| RISING TEMPERATURE OF DISPLAY | 18.3℃ | 13.7℃ | 25% |

# FIG. 9A

| TOLERANCE [%] | AREA RATIO Sr | HEAT TRANSPORT POWER RATIO Tr |
|---|---|---|
| 25 | Sr<3.0:NO DIVISION<br>3.0≦Sr:DIVIDED | Tr<7.7:NO DIVISION<br>7.7≦Tr<100:DIVIDED INTO NINE PARTS<br>100≦Tr:DIVIDED INTO TWO PARTS |

# FIG. 9B

| MODEL NAME:M0 | | | | |
|---|---|---|---|---|
| COMPONENT NAME 1 | SIZE 1 | COMPONENT NAME 2 | SIZE 2 | CONTACT |
| LCD | 70-140-0.8 | LCD_Metal | 62-140-0.2 | 0 |
| LCD_Metal | 62-140-0.2 | GRAPHITE SHEET | 60-140-0.2 | 1 |
| GRAPHITE SHEET | 60-140-0.2 | TIM | 14-14-0.3 | 1 |
| TIM | 14-14-0.3 | CPU | 15.6-15.6-1.3 | 1 |
| CPU | 15.6-15.6-1.3 | PCB | 58-56-0.8 | 1 |
| PCB | 58-56-0.8 | REAR CASE | 70-140-0.8 | 0 |

# FIG. 10

```
                    ( START )
                        │
        ┌───────────────┤
        │          ╱─────────────╲  ⌐S10
┌───────┤    NO  ╱                 ╲
│        └─────◄  IS COMPONENT DATA INPUT? ►
│                 ╲                 ╱
│                  ╲───────────────╱
│                        │ YES
│           ┌────────────────────────────┐
│           │   ACQUIRE COMPONENT DATA    │──⌐S12
│           └────────────────────────────┘
│                        │
│           ┌────────────────────────────┐
│           │  REQUEST INPUT OF TOLERANCE │──⌐S14
│           └────────────────────────────┘
│                        │
│       ┌────────────────┤
│       │          ╱─────────────╲  ⌐S16
│───────┤    NO  ╱                 ╲
        └─────◄   IS TOLERANCE INPUT?  ►
                 ╲                 ╱
                  ╲───────────────╱
                        │ YES
           ┌────────────────────────────┐
           │     ACQUIRE TOLERANCE       │──⌐S18
           └────────────────────────────┘
                        │
           ┌────────────────────────────┐
           │ GENERATE ESTIMATION MODEL TABLE │──⌐S20
           └────────────────────────────┘
                        │
           ┌────────────────────────────┐
           │ DISPLAY ESTIMATION MODEL TABLE │──⌐S22
           └────────────────────────────┘
                        │
        ┌───────────────┤
        │          ╱─────────────╲  ⌐S24
┌───────┤    NO  ╱   IS CONFIRMATION ╲
│        └─────◄  OPERATION PERFORMED? ►
│                 ╲                 ╱
│                  ╲───────────────╱
                        │ YES
           ┌────────────────────────────┐
           │ ACQUIRE CONTACT DETERMINATION TABLE │──⌐S26
           └────────────────────────────┘
                        │
           ┌────────────────────────────┐
           │  DETERMINE DIVISION NUMBER  │──⌐S28
           └────────────────────────────┘
                        │
           ┌────────────────────────────────────┐
           │ CONSTRUCT THERMAL NETWORK MODEL, EXECUTE │──⌐S30
           │ THERMAL ANALYSIS PROCESSING, AND OUTPUT  │
           └────────────────────────────────────┘
                        │
                    (  END  )
```

# FIG. 11

REAR CASE HEAT CONDUCTIVITY [W/mK]

■ REAR CASE SIDE HEAT DISSIPATION
◇ DISPLAY SIDE HEAT DISSIPATION

IC TEMPERATURE [°C]

GRAPHITE SHEET HEAT CONDUCTIVITY [W/mK]

# FIG. 12

LOWER LAYER FINE WIRING PORTION

| Sr | Sr<5.0 | NO DIVISION |
|---|---|---|
|  | 5.0≦Sr | DIVIDED |

| Tr | Tr<10 | NO DIVISION |
|---|---|---|
|  | 10≦Tr<100 | DIVIDED INTO NINE PARTS |
|  | 100≦Tr | DIVIDED INTO THREE PARTS |

TRANSISTOR

| Sr | Sr<1.1 | NO DIVISION |
|---|---|---|
|  | 1.1≦Sr | DIVIDED |

| Tr | Tr<3 | NO DIVISION |
|---|---|---|
|  | 3≦Tr<100 | DIVIDED INTO 100 PARTS |
|  | 100≦Tr | DIVIDED INTO 10 PARTS |

# FIG. 13

50

CLOUD
SERVER

80

USER
TERMINAL

USER
TERMINAL

...

70

70

## INTERNATIONAL SEARCH REPORT

| | International application No. |
|---|---|
| | PCT/JP2017/021459 |

**A. CLASSIFICATION OF SUBJECT MATTER**
*G06F17/50(2006.01)i*

According to International Patent Classification (IPC) or to both national classification and IPC

**B. FIELDS SEARCHED**

Minimum documentation searched (classification system followed by classification symbols)
G06F17/50

Documentation searched other than minimum documentation to the extent that such documents are included in the fields searched

| | | | |
|---|---|---|---|
| Jitsuyo Shinan Koho | 1922–1996 | Jitsuyo Shinan Toroku Koho | 1996–2017 |
| Kokai Jitsuyo Shinan Koho | 1971–2017 | Toroku Jitsuyo Shinan Koho | 1994–2017 |

Electronic data base consulted during the international search (name of data base and, where practicable, search terms used)
IEEE Xplore, JSTPlus(JDreamIII)

**C. DOCUMENTS CONSIDERED TO BE RELEVANT**

| Category* | Citation of document, with indication, where appropriate, of the relevant passages | Relevant to claim No. |
|---|---|---|
| A | JP 2002-183223 A  (Sharp Corp.), 28 June 2002 (28.06.2002), paragraphs [0067] to [0110]; fig. 5 to 6 (Family: none) | 1-13 |
| A | JP 2016-192160 A  (Canon Inc.), 10 November 2016 (10.11.2016), paragraphs [0010] to [0047] & US 2016/0292870 A1 paragraphs [0031] to [0068] & KR 2016-0117348 A | 1-13 |
| A | JP 2003-11199 A  (Canon Inc.), 15 January 2003 (15.01.2003), paragraphs [0025] to [0057]; fig. 2 (Family: none) | 1-13 |

| ☐ Further documents are listed in the continuation of Box C. | ☐ See patent family annex. |
|---|---|

| * | Special categories of cited documents: |
|---|---|
| "A" | document defining the general state of the art which is not considered   to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 17 August 2017 (17.08.17) | 29 August 2017 (29.08.17) |

| Name and mailing address of the ISA/ | Authorized officer |
|---|---|
| Japan Patent Office 3-4-3,Kasumigaseki,Chiyoda-ku, Tokyo 100-8915,Japan | |
| | Telephone No. |

Form PCT/ISA/210 (second sheet) (January 2015)

**EP 3 637 286 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004318250 A
- JP 2007122506 A
- JP 2012064036 A